# EUROPEAN PATENT SPECIFICATION

(11) **EP 2 540 251 B1**
(45) Date of publication and mention of the grant of the patent: **29.03.2017**
(21) Application number: 11747498.1
(22) Date of filing: 25.02.2011
(51) Int. Cl.: A61C 5/42, A61C 5/50

(54) **MANUFACTURING METHOD OF A DENTAL ROOT CANAL TREATMENT INSTRUMENT**
HERSTELLUNGSVERFAHREN EINES ZAHNÄRZTLICHEN INSTRUMENTS ZUR WURZELKANALBEHANDLUNG
PROCÉDÉ DE FABRICATION D'UN INSTRUMENT POUR LE TRAITEMENT DE CANAL RADICULAIRE DENTAIRE

(30) Priority: 26.02.2010 JP 2010041907
(43) Date of publication of application: 02.01.2013
(73) Proprietor: Mani, Inc., Tochigi 321-3231 (JP)
(72) Inventor: KATOH, Kazuaki, Utsunomiya-shi Tochigi 321-3231 (JP)
(74) Representative: Isarpatent
(86) International application number: PCT/JP2011/054259
(87) International publication number: WO 2011/105542

(56) References cited:
- JP-A- 8 173 456
- JP-A- 2007 061 286
- JP-A- 2007 125 392
- JP-U- 54 079 796
- US-A1- 2006 110 704
- US-A1- 2006 110 704

## Description

### [Technical Field]

The present invention relates to a manufacturing method of a dental root canal treatment instrument used when grinding down a root canal inner wall and filling it with a filler in dental root canal treatment.

### [Background Art]

Dental root canal treatment treats dental roots by removing dentin and nerves infected by bacteria using a dental root canal treatment instrument such as a reamer or a file.

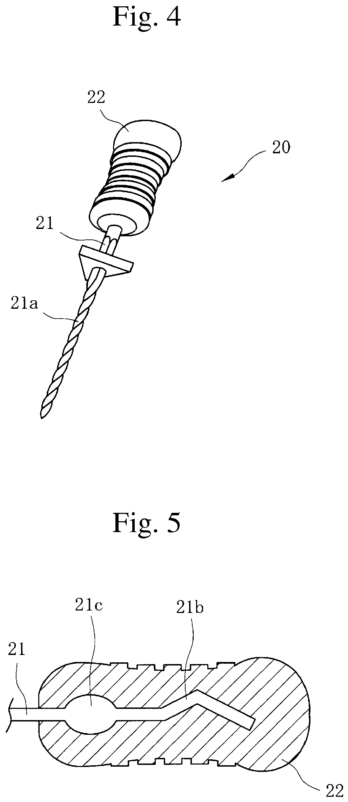

FIG. 4 is a perspective view of a conventional handheld dental root canal treatment instrument (reamer). A reamer 20 has a main metal frame 21 and a synthetic-resin handle 22, where a working portion 21a on the front edge of the main frame 21 is a cutting tool. A practitioner grabs the handle 22 and inserts the tip of the working portion 21a into a root canal, rotates it, and pushes and pulls so as to cut the inner wall and enlarge the root canal. In this case, as the dental root canal treatment instrument such as the reamer 20 is rotated at times during use, a joined portion of the main frame 21 and the handle 22 shall not be loose nor shall it spin during rotation.

FIG. 5 is a cross-sectional view of the joined portion of a conventional handheld dental root canal treatment instrument. The conventional handheld dental root canal treatment instruments disclosed in Patent Document 1 (JP H05-146455 A) and Patent Document 2 (JP H09-154853 A) are provided with a folded portion 21b, which is formed by bending the base, and a widened portion 21c, which is formed by squashing a part of the base using a press, at a portion buried in the handle 22 of the main frame 21. The handle 22 is injection molded, covering the formed folded portion 21b and the widened portion 21c, and is thereby integrated securely against rotation and pulling out. Note that typically, either the folded portion 21b or the widened portion 21c is formed in many cases, where the folded portion 21b is formed when the diameter of the main frame 21 is small, and the widened portion 21c is formed when it is large.

In this case, formation of the folded portion 21b and the widened portion 21c as disclosed in Patent Document 1 and Patent Document 2 needs to be carried out through a different process than formation of the working portion 21a due to the shape thereof. In other words, manufacturing of the main frame 21 of the reamer 20 or the like is carried out through a different processing method from the process forming the working portion 21a and process forming the folded portion 21b and the widened portion 21c using a different device.

As operations are carried out using different devices and different processing methods, it is necessary to remove an instrument from a device and transport it to another location in the intervals of respective operations, thereby increasing processes and time required, leading to increase in production cost.

Meanwhile, there are dental root canal treatment instruments called a spreader and a plugger, which are tools constituted by a metal, rod-like main frame and a synthetic resin handle in the same manner as the reamer and the file. The spreader or the plugger may be used for compaction of a root canal filler called gutta-percha, so as to keep bacteria and the like from entering the root canal after a nerve is removed using a reamer or the like. The spreader may be inserted close to the apex of the root since the tip of the working portion is sharp, and is thus appropriate for lateral compaction of gutta-percha while the plugger is appropriate for vertical compaction of gutta-percha since it has a flat working portion tip. Since a dental root canal treatment instrument, such as the spreader or the plugger, is hardly ever rotated during use as is the reamer, for example, the joined portion of the main frame and the handle does not need to be strengthened against rotation as long as it does not become loose or unfasten when pushed and pulled or moved to the side.

### [Prior Art Documents]

### [Patent Documents]

Patent Document 1: JP H05-146455 A
Patent Document 2: JP H09-154853 A

US 2006/110704 A1 discloses a manufacturing method for a dental root canal treatment instrument provided with a synthetic resin handle on a metal, rod-like main frame.

### [Disclosure of Invention]

### [Problem to be Solved by the Invention]

In light of these conditions, the present invention aims to provide a manufacturing method of a dental root canal treatment instrument that can manufacture a metal, rod-like main frame easily by forming a joined portion and a working portion using a common device through the same processing method, wherein the dental root canal treatment instrument has sufficient strength against rotation and pulling out according to use.

### [Means of Solving the Problem]

The dental root canal treatment instrument is provided with a synthetic resin handle on a metal, rod-like main frame. It comprises a main frame including a working portion having a tapered point to be inserted in a root canal during use, and a joined portion buried within the handle, continuing to the end on the wide side of the working portion. The working portion and the joined portion are formed through the same processing method according to the present invention.

The joined portion should have at least one concave portion or convex portion. Moreover, the joined portion may also include a plurality of crossing spiral grooves or a plurality of twisted portions running along opposite axes, and the working portion and the joined portion of the main frame may be formed integrally around the same central axis. Furthermore, the concave portion and/or the convex portion may be a constricted portion and/or an expanded portion.

A manufacturing method for a dental root canal treatment instrument according to the present invention provided with a synthetic resin handle on a metal, rod-like main frame, and is characterized by including the steps of present claim 1.

The step of forming the working portion and the joined portion through the same processing method may be carried out by any one of cutting, grinding, or a spiral-twisting method. Alternatively, operations of forming the working portion and the joined portion through the same processing method may be carried out continuously. In this case, either the working portion or the joined portion may be formed first.

### [Result of the Invention]

The manufacturing method according to the present invention of the dental root canal instrument allows sufficient reinforcement of the joint at the handle and processing of the joined portion with the working portion of the main frame using the same method, thereby allowing a simple manufacturing process and reduced production cost.

### [Brief Description of Drawings]

FIG. 1 illustrates a dental root canal treatment instrument, where 1(a) is a top view and 1(b) is a cross-sectional view;
FIG. 2 is a diagram illustrating status of use of a plugger;
FIG. 3 illustrates an embodiment of the dental root canal treatment instrument, where 3(a) is a top view of a working portion in which spiral cutting blades are formed and a joined portion in which spiral grooves are formed, and 3(b) is a top view where the working portion and the joined portion are twisted;
FIG. 4 is a perspective view of a conventional handheld dental root canal treatment instrument; and
FIG. 5 is a cross-sectional view of the conventional handheld dental root canal treatment instrument.

### [Best Mode for Carrying Out the Invention]

An embodiment of the present invention is described while referencing the attached drawings.

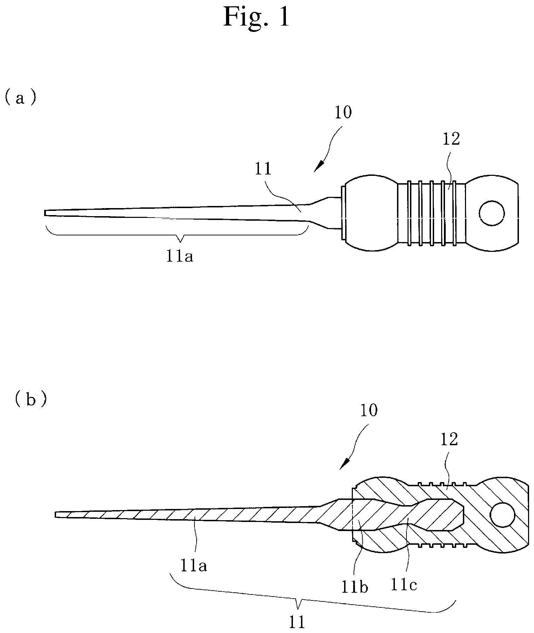

FIG. 1 illustrates a dental root canal treatment instrument, where 1(a) is a top view and 1(b) is a cross-sectional view. A dental root canal treatment instrument 10 is constituted by a metal, rod-like main frame 11 and a synthetic resin handle 12. The main frame 11 includes a working portion 11a and a joined portion 11b.

The working portion 11a has a tapered point to be inserted in a root canal when used. Accordingly, it has flexibility allowing deformation along the root canal. Note that the dental root canal treatment instrument 10 shown in FIG. 1 illustrates a plugger where the end of the working portion 11a is flat, however, in the case of a spreader, there is a difference in that the end thereof is pointed. However, distinction between the spreader and the plugger is unnecessary, and either may be used. Moreover, in the case of the reamer or the file, the working portion has twisted cutting blades, such as 21a of FIG. 4, or spiral cutting blades.

The joined portion 11b is buried within the handle 12, continuing to the end on the wide side of the working portion 11a. The joined portion 11b has at least one concave portion or convex portion in order to reinforce the joint with the handle 12. Alternatively, the concave portion and/or the convex portion may be a constricted portion and/or a diameter expanded portion. Note that the cross-sectional view of FIG. 1(b) illustrates a diagram including a constricted portion 11c. On the other hand, this portion may be an expanded portion. This is because even the expanded portion has resistance against pulling out and the like. The expanded portion may be provided at the end of the joined portion 11b, or the constricted portion 11c or the expanded portion may be provided at multiple locations. Moreover, since the main frame 11 is formed on a single central axis when such a constricted portion 11c and/or expanded portion is provided, the working portion 11a and the joined portion 11b are formed around the same central axis. Furthermore, a D-cut shape may be formed in the concave portion and/or the convex portion, which thereby allows resistance in the rotative direction in addition to the pulling out direction.

In this case, concave and convex portions, such as the constricted portion 11c, the expanded portion, and the D-cut, may be formed through cutting work using a lathe. This allows integral manufacture of the working portion 11a up to the joined portion 11b, namely the entire main frame 11 through cutting work using a single device (a lathe), and thereby provides advantages of simplifying manufacturing and reducing production cost. Injecting a synthetic resin to cover the joined portion 11b formed in this manner and preparing the handle 12 completes the product form.

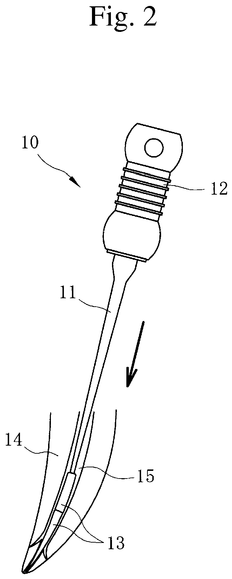

FIG. 2 is a diagram illustrating status of use of a plugger. A state where vertical compaction of gutta-percha 13 into a root canal 15 of a tooth 14 is carried out using a plugger as the dental root canal treatment instrument 10 is illustrated herein. When the practitioner grabs the handle 12 and moves the dental root canal treatment instrument 10 vertically so as to press the gutta-percha 13 along the root apex, the dental root canal treatment instrument 10 is essentially not rotated. That is, in the case where the concave portion and/or the convex portion is constricted portion 11c and/or expanded portion as shown in FIG. 1(b), the joint of the joined portion 11b and the handle 12 is not very strong against rotation, however, if it is not rotated during use as with the spreader or the plugger, there is no particular inconvenience.

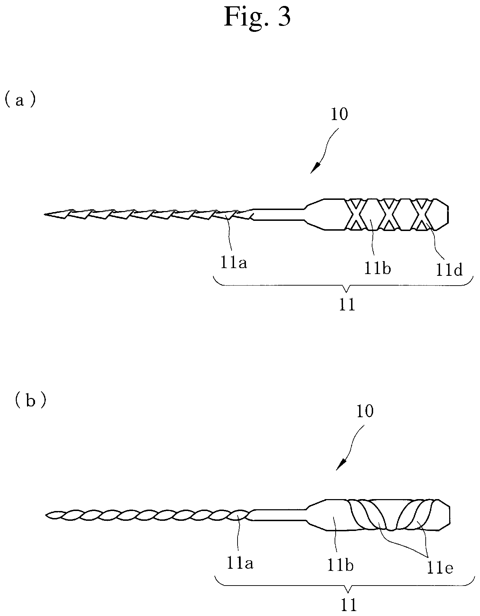

FIG. 3 illustrates an embodiment of the dental root canal treatment instrument obtainable with the manufacturing method according to the present invention, where 3(a) is a top view of the working portion 11a in which spiral cutting blades are formed and the joined portion 11b in which spiral grooves are formed, and 3(b) is a top view where the working portion 11a and the joined portion 11b are twisted. When the concave portion and/or the convex portion provided in the joined portion 11b is formed by multiple crossing spiral grooves 11d, as shown in FIG. 3(a), or when multiple twisted portions 11e running along opposite axes are formed, as shown in FIG. 3(b), it has strength against rotation and pulling out. Note that the spiral grooves 11d cross each other, and the twisted portions 11e run along opposite axes, thereby allowing resistance against rotation in the left and the right directions. Therefore, the joined portion 11b as in these embodiments allows application of not only the spreader and the plugger but the reamer and the file as well.

Here, in the case of providing the spiral cutting blades of the working portion 11a and the spiral grooves 11d of the joined portion 11b, as shown in FIG. 3(a), grinding should be performed using the device disclosed in Japan Examined Patent Publication No. SHO 61-50455. While this grinding is performed continuously using a common device, either the working portion 11a or the joined portion 11b may be formed first. As such, processing of the cutting blades of the working portion 11a and the spiral grooves 11d of the joined portion 11b is carried out through the same grinding method, allowing use of a single common device.

Moreover, in the case of providing spirally twisted cutting blades of the working portion 11a and the twisted portions 11e of the joined portion 11b, as shown in FIG. 3(b), spiral-twisting should be performed using the spiral-twisting device disclosed in JP 4168194. While this spiral-twisting is performed continuously using a common device, either the working portion 11a or the joined portion 11b may be formed first. As such, spiral-twisting of the cutting blades of the working portion 11a and the twisted grooves 11e of the joined portion 11b is carried out through the same spiral-twisting method, allowing use of a single common device.

In this manner, the dental root canal treatment instrument 10 and the manufacturing method thereof according to the present invention allows formation of the working portion 11a and the joined portion 11b through the same processing method using a single common device, thereby reinforcing the joint with the handle 12 and providing a simplified manufacturing process.

### [Description of Reference Numerals]

- 10:: dental root canal treatment instrument
- 11, 21:: main frame
- 11a, 21a:: working portion
- 11b:: joined portion
- 11c:: constricted portion
- 11d:: spiral groove
- 11e:: twisted portion
- 12, 22:: handle
- 21b:: folded portion
- 21c:: widened portion

## Claims

1. Method for manufacturing a dental root canal treatment instrument (10), which is formed by a plugger having a flat end or a spreader having a tapered end, provided with a synthetic resin handle (12) on a metal, rod-like main frame (11), comprising the steps of:
integrally forming by means of a single device, a working portion (11a) having the flat or tapered end to be inserted in a root canal during use, and a joined portion (11b) buried within the handle, continuing to the end on the wide side of the working portion (11a) in the main frame (11), the joined portion (11b) having a concave portion and/or convex portion and wherein the working portion (11a) and the joined portion (11b) are integrally formed around a single central axis; and
injecting a synthetic resin to cover the joined portion (11b) so as to prepare the handle.

2. Manufacturing method for a dental root canal treatment instrument (10) according to claim 1, wherein the integrally forming by means of a single device of the working portion (11a) and the joined portion (11b) comprises cutting work using a lathe.

## Patentansprüche

1. Verfahren zum Fertigen eines Zahnwurzelkanalbehandlungsinstruments (10), ausgebildet mit einem Stopfer mit einem flachen Ende oder einem Spreader mit einem zulaufenden Ende, versehen mit einem Synthetikharzgriff (12) auf einem metallischen stabähnlichen Hauptrahmen (11), die folgenden Schritte umfassend:
einstückiges Ausbilden, unter Einsatz einer einzigen Vorrichtung, eines Arbeitsabschnitts (11a) mit dem flachen oder dem zulaufenden Ende, das im Gebrauch in einen Wurzelkanal einzuführen ist, und eines verbundenen Abschnitts (11 b), der in dem Griff, fortlaufend bis zu dem Ende auf der breiten Seite des Arbeitsabschnitts (11a) in dem Hauptrahmen (11), eingebettet ist, wobei der verbundene Abschnitt (11b) einen konkaven Abschnitt und/oder konvexen Abschnitt aufweist und wobei der Arbeitsabschnitt (11a) und der verbundene Abschnitt (11 b) einstückig um eine einzige Mittelachse herum ausgebildet werden; und
Einspritzen eines Synthetikharzes, um den verbundenen Abschnitt (11b) abzudecken, um so den Griff herzustellen.

2. Fertigungsverfahren für ein Zahnwurzelkanalbehandlungsinstrument (10) nach Anspruch 1, wobei das einstückige Ausbilden, unter Einsatz einer einzigen Vorrichtung, des Arbeitsabschnitts (11a) und des verbundenen Abschnitts (11b) Schneidarbeiten mittels einer Drehbank umfasst.

## Revendications

1. Procédé de fabrication d'un instrument de traitement de canal radiculaire dentaire (10), qui est formé par un fouloir ayant une extrémité plate ou un spreader ayant une extrémité effilée, doté d'un manche en résine synthétique (12) sur un châssis principal de type tige en métal (11), comprenant les étapes de :
formation d'un seul tenant au moyen d'un dispositif unique, d'une partie de travail (11a) ayant l'extrémité plate ou effilée à insérer dans un canal radiculaire pendant l'utilisation et d'une partie jointe (11b) noyée dans le manche, continuant jusqu'à l'extrémité sur le côté large de la partie de travail (11a) dans le châssis principal (11), la partie jointe (11b) ayant une partie concave et/ou une partie convexe, la partie de travail (11a) et la partie jointe (11b) étant formées d'un seul tenant autour d'un axe central unique ; et
injection d'une résine synthétique pour couvrir la partie jointe (11b) de façon à préparer le manche.

2. Procédé de fabrication d'un instrument de traitement de canal radiculaire dentaire (10) selon la revendication 1, dans lequel la formation d'un seul tenant au moyen d'un dispositif unique de la partie de travail (11a) et de la partie jointe (11b) comprend un travail de coupage à l'aide d'un tour.
